# EUROPÄISCHE PATENTANMELDUNG

(11) **EP 1 279 695 A1**
(43) Veröffentlichungstag der Anmeldung: **29.01.2003**
(21) Anmeldenummer: 01117601.3
(22) Anmeldetag: 23.07.2001
(51) Int. Cl.: C08J 5/12, C09J 7/02, B65H 35/00

(54) **Montageklebeband zur verbesserten Fugenabdichtung und Montagebanddispenser**

(71) Anmelder: Silu Verwaltung AG, 6045 Meggen (CH)
(72) Erfinder: Sieber, Reto, 6019 Sigigen (CH); Sieber, Marco, 6048 Horw (CH)
(74) Vertreter: Leske, Thomas, Dr.

(57) **Zusammenfassung**

Es wird ein selbstklebendes Band zum Schließen, Abdichten und Verkleben im Hausbau vorgeschlagen mit einer Trägerschicht (1) auf der Bandoberseite und mit einer auf der Bandunterseite vorgesehenen Klebeschicht (2), welche mit einer abziehbaren Deckfolie (3) versehen ist, wobei die Deckfolie in Längsrichtung mindestens einen Schlitz (6) aufweist und das Band entlang des Schlitzes (6) so auf sich selbst gefaltet ist, dass mindestens ein Teil der Deckfolie (3) außen angeordnet ist, und wobei mindestens ein seitlicher Längsabschnitt vorgesehen ist, welcher perforiert ist.

## Beschreibung

Die vorliegende Erfindung betrifft ein selbstklebendes Band zum Verschließen, Abdichten und Verkleben von Fugen im Hausbau, ein sog. Montageklebeband, welches insbesondere für Fugen in Ecken und Kanten geeignet ist sowie einen Dispenser für ein solches Band. Derartige Klebebänder finden z.B. Anwendung im Hausbau, wenn verschiedene Bauelemente, wie Türen oder Fenster, in eine Hausaußenwand eingesetzt werden und die dabei zwischen dem Element und der Hausaußenwand entstehende Fuge verschlossen werden muß. Solche selbstklebenden Bänder weisen eine Trägerschicht und eine mit ihr verbundene Klebeschicht auf, wobei die Klebeschicht in der Regel mit einer abziehbaren Deckfolie versehen ist.

Ein Problem derartiger selbstklebender Bänder ist die Schwierigkeit in schwer zugänglichen Bereichen das Band dennoch gut abdichtend für die zu verschließende Fuge anzubringen und dabei die Trägerschicht glatt auf den Fugenrandabschnitt aufzukleben, um ein möglichst luft- bzw. feuchigkeitsdichtes Verschließen dieser Fugen zu erreichen.

Ein weiteres Problem besteht darin, daß bei der Verarbeitung des Bandes die Deckfolie häufig nur schwer von der Klebeschicht entfernbar ist, da an den glatten Schnittkanten des Klebebandes keine Mittel vorgesehen sind, um von dem zu verklebenden Abschnitt des Bandes die Deckfolie anheben und abziehen zu können.

Der Erfindung liegt die Aufgabe zugrunde, ein selbstklebendes Band zum Verschließen, Abdichten und Verkleben von Fugen bereitzustellen, welches auch in schwer zugänglichen Bereichen, wie z.B. Ecken und Kanten, leicht und effektiv verklebbar ist, welches sicher und langfristig an jedem Untergrund haftet, und welches zudem den Verklebevorgang, sprich die Verwendung des Bandes in diesen Bereichen, erleichtert. Eine weitere Aufgabe der Erfindung ist es, die Lagerung, den Transport und die Verarbeitung des selbstklebenden Bandes zu verbessern.

Diese Aufgabe wird mit einem selbstklebenden Band gemäß den in Anspruch 1 genannten Merkmalen bzw. mit einem Dispenser für ein Klebeband nach Anspruch 17 gelöst. Vorteilhafte Ausgestaltungen und Weiterbildungen sind Gegenstand der Unteransprüche.

Die Deckfolie des erfindungsgemäß selbstklebenden Bandes weist in Längsrichtung mindestens einen Schlitz auf, und das Band ist in Querrichtung entlang dieses Schlitzes so auf sich selbst gefaltet, daß mindestens ein Teil der Deckfolie außen angeordnet ist. Auf diese Weise kann die Deckfolie an der Faltung des Bandes zu ihren beiden Seiten hin leicht von der Klebefolie angehoben und abgezogen werden, da die Deckfolie an der Faltung geschlitzt ist und hierdurch die Deckfolienränder jeweils etwas von der Klebeschicht gelöst sind. Die schon vorab etwas gelösten Deckfolienränder sind leicht mit dem Finger auch unter erschwerten Bedingungen greifbar, so daß sich das Problem einer sich nicht lösenden oder schwer abzuziehenden Deckfolie nicht ergibt. Darüber hinaus ist das Band durch die Faltung und die geschlitzte Deckfolie auch leichter zu verarbeiten. Das Band kann in zu verklebenden Eckfugen zunächst mit nur einem Teil der abgezogenen Deckfolie fugenparallel und eckparallel angeklebt werden, und hernach, wenn das Klebeband schon auf einer Seite des Fugenabschnittes angeklebt ist, kann leicht die gegenüberliegende Deckfolienseite abgezogen und das Klebeband vollständig über die Fuge verklebt werden. Durch die Vorfaltung des Klebebandes wird hierbei auch verhindert, daß sich beispielsweise ungewollt Faltungen oder Verwerfungen beim verklebten Band ergeben, welche zu ungewünschten Undichtigkeiten und Problemen in der Weiterverarbeitung des verklebten Fugenbereiches führen.

Bei einem Verkleben des selbstklebenden Bandes über Fugen, welche sich in 90°-Ecken befinden (z.B. Fugen zwischen Fensterrahmen und Hausaußenwänden), gewährleistet das vorgefaltete Band ein sehr präzises Verkleben in die jeweilige Ecke.

Das Band kann getrennt nacheinander mit den gefalteten Längsabschnitten verklebt werden, wodurch verhindert wird, daß das stark haftende Band unsauber verklebt wird und ggfs. durch Abziehen und erneutes Verkleben Klebstoff- oder Klebebandreste sichtbar zurückbleiben. Zudem entfällt ein Anzeichnen von Verklebungslinien, da durch die Vorfaltung das Band sehr genau und gerade in die Ecken angeklebt werden kann und so das Verarbeiten hierdurch wesentlich einfacher wird.

Ein weiterer Vorteil der Vorfaltung liegt in der Zeiteinsparung beim Verarbeiten des selbstklebenden Bandes. Das bisher erforderliche Vorfalten des Bandes Stück für Stück von Hand entfällt vollständig, so daß bei dem Verarbeiten des erfindungsgemäßen Bandes eine Verkürzung der Verklebezeit bis zu ihrer Halbierung erreicht werden kann.

Das Band weist mindestens einen seitlichen Längsabschnitt auf, d.h. einen Bereich an einer Längsseite des Klebebandes, in welchem die Trägerschicht und die Klebeschicht perforiert ausgebildet sind. Perforiert heißt hier, daß mindestens eine Reihe von durchgehenden Öffnungen in der Trägerschicht und der Klebeschicht vorgesehen sind. Durch die Perforation wird die Klebehaftung des Bandes beim anschließenden Überputzen mit Mauerputz oder Gips oder dergleichen verbessert. Denn auf diese Weise haftet der Putz in den Öffnungen der Perforation direkt an dem Untergrund und verstärkt so die Haftung des Bandes auch auf porösem Untergrund. Es wird hierdurch vermieden, daß durch die Feuchtigkeit und das Gewicht von einer aufgetragenen Putzschicht oder dergleichen, das Band sich von dem Untergrund lösen kann und somit Undichtigkeiten entstehen bzw. die Putzschicht aufbrechen kann. Auch beim anschließenden Überkleben des Bandes mit einer Tapete oder mit Dekorationsplatten wird die Haftverbindung der Klebeschicht auf dem Untergrund verbessert. Die Perforation ist lediglich an einem seitlichen Längsabschnitt des Klebebandes vorgesehen, damit der mittige Klebebereich die Abdichtfunktion des Klebebandes sicher gewährleisten kann. Die Perforation des seitlichen Längsabschnittes des Klebebandes kann aus im wesentlichen runden, eckigen oder ovalen Öffnungen gebildet sein, welche vorzugsweise gleichmäßig verteilt angeordnet sind. Hierdurch wird erreicht, daß die Klebefunktion der Klebeschicht möglichst wenig beeinträchtigt wird und dennoch ein Hindurchdringen von einer auf das Klebeband aufzutragenden Schicht eines Materials durch die Öffnungen hierdurch an dem Untergrund, auf welchem das Klebeband aufgeklebt ist, haften kann. Mit dem erfindungsgemäßen Klebeband ist ein sicherer Halt dadurch gewährleistet, daß die Perforationsöffnungen ein teilweises Durchdringen des Bandes einer aufzutragenden Schicht, wie z.B. Putz erlauben, welche anschließend auf mindestens einen Teilbereich des Bandes aufgetragen wird.

Nach einer vorteilhaften Ausgestaltung der Erfindung ist das Band zweimal geschlitzt und entlang einem der Schlitze in Querrichtung gefaltet. Dies hat den Vorteil, daß die Deckfolie in kleinen Längsabschnitten sukzessive von der Klebeschicht abziehbar ist, so daß das Klebeband noch leichter angesetzt und genauer verklebt werden kann. Zunächst kann in einem sehr kleinen Randabschnitt das Band angeklebt werden, und anschließend kann der nächstliegende Deckfolienabschnitt zur Weiterverklebung des Bandes abgezogen werden. Erst ganz zuletzt muß der letzte Deckfolienabschnitt, beispielsweise der auf der umgeknickten Bandseite, abgezogen werden, welcher bis dahin vor Verschmutzung oder vor dem Verkleben in ungewollter Weise bewahrt wurde.

Nach einer weiteren vorteilhaften Ausgestaltung der Erfindung ist die Trägerschicht aus Papier und/oder Kunststoffolie und die Klebeschicht ein selbstklebender Acrylatkleber. Hierdurch ist das selbstklebende Band auch im gefalteten Zustand unwesentlich dicker gegenüber herkömmlichen Montageklebebändern und es trägt im verklebten Zustand sehr wenig gegenüber dem Klebeuntergrund auf, so daß das Klebeband auch in Bereichen verklebt werden kann, in welchen beispielsweise Bodenbeläge, Tapeten oder Putze anschließend aufgebracht werden sollen. Der Acrylatkleber ist zum einen wegen seiner guten Haftklebeeigenschaft besonders für das Verkleben von Eckfugen geeignet, zum anderen gewährleistet er eine möglichst lang anhaltende Klebewirkung auch bei extremeren Wetter- und Witterungsbedingungen, beispielsweise im Außenbereich.

Nach einer weiteren vorteilhaften Ausgestaltung der Erfindung ist die Trägerschicht so beschaffen, daß sie quer zur Längsrichtung des Bandes von Hand reißbar ist. Hierdurch kann das Band auf einfache Weise in Längsabschnitte zerteilt werden entsprechend der jeweiligen Fugenlänge. Das Band läßt sich somit leichter verarbeiten.

Nach einer weiteren vorteilhaften Ausgestaltung der Erfindung weist die Klebeschicht einen nicht klebenden Mittelstreifen auf und ist die Deckfolie entlang einer Linie zwischen dem nicht klebenden Mittelstreifen und einer angrenzenden Klebeschicht geschlitzt und gefaltet. Für das Verkleben von Fugen zwischen zwei rechtwinklig aufeinanderstoßenden Bauelementen ist dies besonders vorteilhaft, da ein schiefes oder verworfenes Verkleben gerade im Stoßbereich der Bauelemente hierdurch auf einfache Weise verhindert wird. Dennoch gewährleistet das Klebeband ein sicheres Abdichten und Verschließen der Fuge auch über Kanten und Ecken hinweg, da die beiden äußeren Randklebebereiche des Bandes ausreichend breit bemessen sind und so lediglich auf ebenen Flächen aufgeklebt sind.

Nach einer weiteren vorteilhaften Ausgestaltung der Erfindung ist das Band in gefaltetem Zustand zu einer Klebebandrolle aufgerollt. Die an der Faltung offene Klebeschicht kann auf diese Weise nicht mit anderen Klebebandbereichen verkleben, und ein zügiges und einfaches Verarbeiten des Klebebandes ohne vorherige Vorbereitung des Klebevorganges ist möglich. Von der Rolle können auf leichte Weise entsprechende, auf Länge geschnittene Bandstücke entnommen werden und diese unverzüglich auf einer Seite nach Abziehen der Deckfolien verklebt werden. Der Arbeitsgang eines Vorfaltens vor dem Anbringen des Bandes auf die zu verschließende Fuge entfällt; ein Fugenverkleben kann deswegen schneller und kostengünstiger als bisher durchgeführt werden.

Nach einer weiteren vorteilhaften Ausgestaltung der Erfindung ist mindestens an der gefalteten Seite der Rolle eine Zwischenlage vorgesehen. Die Zwischenlage gewährleistet hierbei, daß beim Transport oder bei der Lagerung des aufgerollten und gefalteten Bandes dieses nicht an der offenen Klebeseite der Faltung verkleben kann. Zudem wird hierdurch verhindert, daß Schmutz und dergleichen sich an dieser Seite festsetzen, was die Klebewirkung des Bandes nachteilig beeinflussen würde.

Nach einer weiteren vorteilhaften Ausgestaltung der Erfindung ist das Band auf einer angepaßten Abrolleinrichtung aufgerollt, von welcher es wieder abrollbar ist. Hierdurch entfällt ein umständliches Auspacken und Aufbewahren des selbstklebenden Bandes, da dieses einfach von der Abrolleinrichtung wieder abgerollt werden kann und in den erforderlichen Längenabschnitten von der Rolle abgeschnitten werden kann. Die Abrolleinrichtung vereinfacht aber nicht nur die Entnahme des Bandes, sondern dient auch als Schutz- und Transportverpackung. Darüber hinaus kann die Abrolleinrichtung als Verarbeitungsmittel eingesetzt werden, indem beispielsweise das selbstklebende Band ein Stück von der Einrichtung abgerollt wird, die selbstklebende Folie auf einer der gefalteten Seiten stückweise abgezogen wird und anschließend das Band über eine längere Strecke fortlaufend direkt aus der Rolle auf eine der Fugenseiten abrollend verklebt wird.

Nach einer weiteren diesbezüglichen vorteilhaften Ausgestaltung der Erfindung sind an der gefalteten Seite Mittel vorgesehen, welche ein Verkleben mit und in der Abrolleinrichtung verhindern. Hierzu kann beispielsweise ein dem Rollendurchmesser entsprechendes silikonisiertes Papier seitlich auf das aufgerollte Band aufgelegt sein, von der sich trotz leichten Verklebens mit dem Band an der Faltung dieses leicht wieder entfernen läßt. Hierbei verhindert das silikonisierte Papier ein seitliches Verkleben im Innern der Abrolleinrichtung, indem es leicht klebend an der Seite der Bandrolle mit dieser beim Abrollen bzw. beim Herausziehen auf der Einrichtung mitdreht.

Gemäß einer vorteilhaften Ausführungsform der Erfindung weisen die Öffnungen des perforierten Längsabschnitts einen durchschnittlichen Durchmesser von mindestens 3 Millimeter auf.

Nach einer vorteilhaften Ausgestaltung der Erfindung sind zwei seitliche Längsabschnitte vorgesehen, welche perforiert sind. Mit einem derartigen Klebeband können Fugen zwischen Bauteilen im Innenausbau abgedichtet werden, bei welchen beidseitig der Fuge das Klebeband mit einer Materialschicht anschließend überarbeitet wird. Dennoch ist unabhängig von der Dicke der auf das Klebeband aufzutragenden Putzschicht, die Dichtigkeit im Fugenbereich dadurch gewährleistet, daß in der Mitte das Klebeband nicht perforiert ist. Der nicht perforierte Abschnitt ist hierbei breiter als die maximale Breite der abzudichtenden Fugen.

Nach einer weiteren vorteilhaften Ausgestaltung der Erfindung ist der perforierte Längsabschnitt von dem nicht klebenden Mittelstreifen beabstandet. Dies hat den Vorteil, daß das Band an Ecken oder Kanten ohne eine Verknittern glatt verklebt werden kann, da es der nicht klebende Mittelstreifen ermöglicht das Band in die Ecke zu drücken, ohne daß es sofort festklebt und sich Falten beim Verkleben bilden. Dadurch, daß der perforierte Längsabschnitt von dem Mittelstreifen beabstandet ist, wird verhindert, daß die Perforationsöffnungen zu Undichtigkeiten führen, wenn die abzudichtende Fuge mit dem nicht klebenden Mittelstreifen überdeckt wird.

Nach einer weiteren vorteilhaften Ausgestaltung der Erfindung sind die Trägerschicht, die Klebeschicht und die abziehbare Deckfolie perforiert. Dies hat herstellungsbezogen den Vorteil, daß das Band in einfacher Weise hergestellt werden kann. Die Deckfolie verhindert dabei, daß ein Perforationswerkzeug, wie z.B. eine Stanzeinrichtung, mit der Klebeschicht des selbstklebenden Bandes in Berührung kommt.

Nach einer weiteren vorteilhaften Ausgestaltung der Erfindung besteht die Trägerschicht aus einem Material, welches eine gute Hafteigenschaft für Mauerputz aufweist. Derartige gute Hafteigenschaften sind beispielsweise durch ein offenporiges Material gewährleistet. Die Verbindung zwischen dem Mauerputz und der Trägerschicht und somit auch die Haftverbindung des Bandes an dem Untergrund wird hierdurch verbessert. Ein Ablösen oder Herausbrechen von Teilen des Mauerputzes wird sicher vermieden.

Nach einem weiteren vorteilhaften Aspekt der Erfindung ist ein Dispenser für das zu einer Rolle aufgewickelte selbstklebende Band vorgesehen, welcher die Rolle im wesentlichen umschließt und mindestens einen Auslaßschlitz für das Klebeband aufweist. Der Dispenser hat den Vorteil einer gleichzeitig schützenden Hülle für den Transport bei einer Vereinfachung in der Handhabung und fortlaufenden Verarbeitung des selbstklebenden Bandes. Auch bei sehr staubigen Umgebungsbedingungen wird verhindert, daß Schmutz an die offenliegenden Klebestellen gelangen kann und die Klebekraft vermindert. Das vom Dispenser umschlossene Klebeband kann auf einfache Weise aus dem Auslaßschlitz heraus abgewickelt werden und kontinuierlich (bei langen Klebestellen) oder Stück für Stück (bei kurzen Klebestellen) direkt aus dem Dispenser entnommen und verklebt bzw. abgeschnitten und verklebt werden.

In der Zeichnung ist ein Ausführungsbeispiel des erfindungsgemäßen Montageklebebandes sowie des Montagebanddispensers dargestellt, welche im folgenden unter Bezugnahme auf die Figuren detailliert beschrieben sind:
- Fig. 1: zeigt ein erstes Ausführungsbeispiel eines Montageklebebandes, welches noch nicht auf sich selbst gefaltet ist;
- Fig. 2: zeigt das Montageklebeband gemäß Fig. 1, bei welchem ein Teil auf sich selbst gefaltet ist;
- Fig. 3:: ein zweites Ausführungsbeispiel eines selbstklebenden Bandes gemäß der Erfindung mit einem perforierten Längsabschnitt; und
- Fig. 4: zeigt eine prinzipielle Darstellung eines Montagebanddispensers für ein auf sich selbst gefaltetes Montageband gemäß der Erfindung.

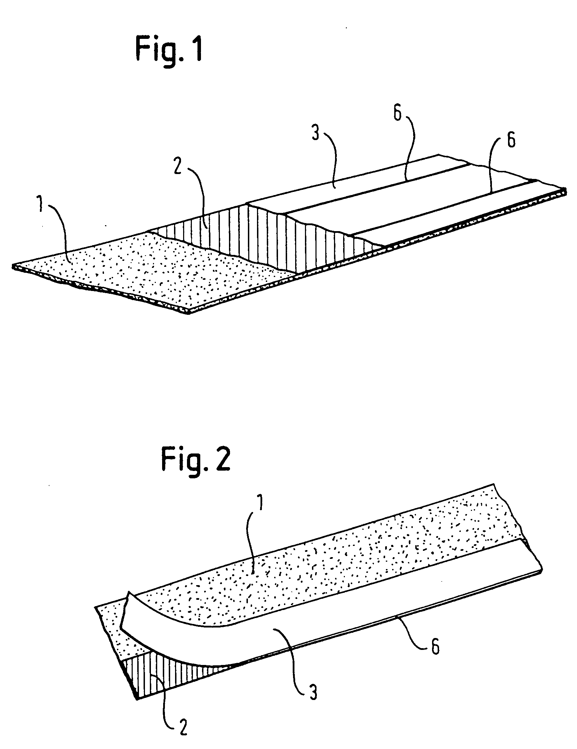

In Fig. 1 is ein Montageklebeband gezeigt, welches eine Trägerschicht 1, eine Klebeschicht 2 und eine Deckfolie 3 aufweist. Die Deckfolie 3 weist in Längsrichtung des Bandes zwei Schlitze 6 auf. Durch das Vorsehen von zwei längs angeordneten Schlitzen 6 ist es somit möglich, die jeweils außen liegenden Bereiche des Montagebandes auf sich selbst zu falten, wobei die Schlitze 6 dabei so angeordnet sein können, daß entweder die jeweils umgefalteten Bandbereiche aufeinander liegen oder daß die Bandbereiche so auf das Band gefaltet sind, daß die gefalteten Bereiche nicht übereinander angeordnet sind.

In Fig. 2 ist das erfindungsgemäße Montageklebeband dargestellt, welches einen prinzipiellen Aufbau wie gemäß Fig. 1 aufweist; das Montageklebeband weist die Trägerschicht 1, die Klebeschicht 2, welche vorzugsweise aus Acrylatkleber besteht, und die Deckfolie 3 auf. Entlang eines im wesentlichen durchgehenden Schlitzes 6 ist das Montageklebeband auf sich selbst gefaltet. Das Band weist eine Breite von 3 bis 4 cm auf, wobei es auch möglich ist, daß der Schlitz 6 der Deckfolie im wesentlichen in der Mitte des Bandes angeordnet ist und somit das Band hälftig aufeinander gefaltet ist. Gemäß Fig. 2 ist nur ein Teil der gesamten Bandbreite entlang des Schlitzes 6 auf sich gefaltet. Die Klebeschicht 2 besteht aus mehr als 100 g/m² Acrylatklebestoff, vorzugsweise jedoch aus 200 g/m². Das Band ist entlang des Schlitzes 6 in der Deckfolie 3 so gefaltet, daß sich in der Faltung die Deckfolie, welche z.B. aus einem silikonisierten Papier besteht, leicht von der Klebeschicht 2 ablöst und somit ohne Probleme von Hand gefaßt und abgezogen werden kann. Das gesamte Band ist in gefaltetem Zustand zu einer Rolle aufgerollt und seitlich mit Zwischenlagen für den Transport und die Verpackung versehen. Die Zwischenlagen sind beispielsweise silikonisierte Papierrondellen, welche im Durchmesser dem Durchmesser des aufgerollten Bandes entsprechen. Die Papierrondellen sind silikonisiert, damit das Band davon auch bei leichter Verklebung an der offenliegenden Faltung leicht gelöst werden kann. Als Antiverklebemittel können jedoch auch andere dem Fachmann bekannte Mittel vorgesehen werden.

Die Trägerschicht 1 ist mindestens auf ihrer von der Klebeschicht 2 abgewendeten Seite in einer hellen Farbe, wie z.B. weiß oder dergleichen, ausgeführt, wodurch eine mit dem Klebeband abgedichtete Fuge auch mit dünnen Gipsschichten, einer dünnen hellen Farbschicht und dergleichen versehen werden kann, ohne daß die Farbe des Bandes anschließend störend hindurchscheinen oder -treten kann. Das Band ist in diesem Ausführungsbeispiel in einer Breite von 3 bis 4 cm ausgeführt, es versteht sich jedoch von selbst, daß entsprechend den Erfordernissen und der Breite der abzudichtenden Fugen auch breitere, bis maximal 50 cm breite erfindungsgemäße Selbstklebebänder vorgesehen werden können.

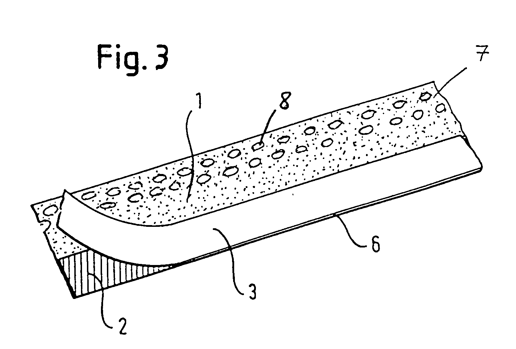

In Figur 3 ist ein Montageklebeband gezeigt, welches eine Trägerschicht 1, eine Klebeschicht 2 und eine an der Klebeschicht 2 vorgesehene Deckfolie 3 aufweist. In Figur 3 ist ein Teil des Klebebandes auf sich selbst gefaltet ist. Es entsteht somit ein vorgefaltetes Montageklebeband, welches an dem Schlitz 6 der Deckfolie 3 so vorgefaltet ist, daß zunächst ein Teil der Deckfolie 3 abgezogen werden kann und beispielsweise leicht in einem Kanten- oder Eckbereich angeklebt werden kann, bevor der andere Teil der Deckfolie 3 (in Figur 3 auf der nicht dargestellten Rückseite des Klebebandes) abgezogen und verklebt werden kann. Die Trägerschicht 1 und die Klebeschicht 2 sind in einem Längsabschnitt 7 des Montageklebebandes perforiert, d.h. mit mehreren durchgehenden Öffnungen versehen. Die Perforation des Längsabschnittes 7 kann wie in dem gezeigten Ausführungsbeispiel aus runden Öffnungen 8 bestehen oder Öffnungen in einer eckigen, ovalen oder undefinierten Form aufweisen. Die Öffnungen der Perforation des Längsabschnittes 7 können gleichmäßig verteilt angeordnet sein oder in Richtung des seitlichen Randes des Montageklebebandes kleiner werden oder in ihrer Anzahl reduziert sein. Vorzugsweise sind die Perforationsöffnungen in dem Längsabschnitt 7 mit einem durchschnittlichen Durchmesser von mindestens 3 mm vorgesehen, damit ein ausreichendes Hindurchdringen von Putz, welcher nach dem Verarbeiten des Montageklebebandes auf die Trägerschicht aufgetragen wird, gewährleistet ist und der Putz eine zusätzliche Haltewirkung durch die Verbindung mit dem Untergrund bewirkt. Hiermit ist in dem Längsabschnitt 7 der Perforation zwar beim Ankleben des Montageklebebandes eine verminderte Klebewirkung aufgrund der Öffnungen der Perforation vorhanden, jedoch wird diese anschließend durch den aufzutragenden Mauerputz mehr als kompensiert. Es wird vorteilhafterweise vermieden, daß durch eine Schicht von Mauerputz oder dergleichen eine derartige Belastung auf die Trägerschicht des Klebebandes ausgeübt wird, daß das Klebeband Gefahr läuft, sich von dem Untergrund zu lösen und undicht zu werden.

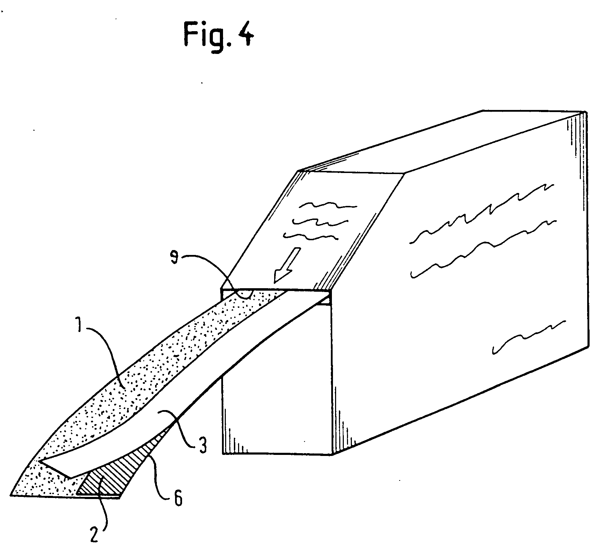

In Fig. 4 ist in prinzipieller Darstellung ein Montagebanddispenser dargestellt, in welchem ein auf sich selbst gefaltetes Montageband gemäß Fig. 2 aufgenommen ist. Ein an einer Stirnseite des Dispensers vorgesehener Auslaßschlitz 9 dient dem Herausführen des Montageklebebandes aus dem Dispenser zum jeweiligen Verbrauch. Der Dispenser ist vorzugsweise aus Karton hergestellt, wobei das Montageklebeband in der Einheit mit dem Montageklebeband zweckmäßigerweise angeboten und einsetzbar ist. Dies hat den Vorteil, daß das Montageklebeband vor Verschmutzung insbesondere an den unmittelbaren Faltlinien geschützt ist, da längs dieser Faltlinien Teile der Klebeschicht frei liegen. Mit dem Dispenser kann somit das Montageklebeband nicht nur zuverlässig transportiert sondern auch auf einer Baustelle sicher und vor Verschmutzung geschützt eingesetzt werden. Der Dispenser kann dabei als Wegwerfartikel ausgebildet sein, d.h. nach vollständig aufgebrauchtem Montageklebeband entsorgt werden oder als Nachfüllbox ausgebildet sein.

## Patentansprüche

1. Selbstklebendes Band zum Verschließen, Abdichten und Verkleben von Fugen im Hausbau, insbesondere von Fugen in Ecken und Kanten, mit einer Trägerschicht auf der Bandoberseite und mit einer auf der Bandunterseite vorgesehenen Klebeschicht, welche mit einer abziehbaren Deckfolie versehen ist, **dadurch gekennzeichnet, dass** die Deckfolie in Längsrichtung mindestens einen Schlitz aufweist und das Band in Querrichtung entlang des Schlitzes so auf sich selbst gefaltet ist, dass mindestens ein Teil der Deckfolie außen angeordnet ist, und dass mindestens ein seitlicher Längsabschnitt vorgesehen ist, welcher perforiert ist.

2. Band nach Anspruch 1, **dadurch gekennzeichnet, dass** es zweimal geschlitzt und entlang einem der Schlitze in Querrichtung gefaltet ist.

3. Band nach Anspruch 1 oder 2, **dadurch gekennzeichnet, dass** die Trägerschicht aus Papier und/oder Kunststoffolie und die Klebeschicht ein selbstklebender Acrylatkleber ist.

4. Band nach einem der vorherigen Ansprüche, **dadurch gekennzeichnet, dass** die Trägerschicht so beschaffen ist, dass sie quer zur Längsrichtung des Bandes von Hand reißbar ist.

5. Band nach einem der vorherigen Ansprüche, **dadurch gekennzeichnet, dass** die Klebeschicht einen nichtklebenden Mittelstreifen aufweist, die Deckfolie entlang einer Linie zwischen nichtklebendem Mittelstreifen und angrenzender Klebeschicht geschlitzt ist und entlang der Linie gefaltet ist.

6. Band nach einem der vorherigen Ansprüche, **dadurch gekennzeichnet, dass** es in gefaltetem Zustand zu einer Klebeband-Rolle aufgerollt ist.

7. Band nach Anspruch 6, **dadurch gekennzeichnet, dass** mindestens an der gefalteten Seite der Rolle eine Zwischenlage vorgesehen ist.

8. Band nach einem der vorherigen Ansprüche, **dadurch gekennzeichnet, dass** es auf einer angepaßten Abrolleinrichtung aufgerollt ist, von welcher es wieder abrollbar ist.

9. Band nach Anspruch 8, **dadurch gekennzeichnet, dass** mindestens an der gefalteten Seite Mittel vorgesehen sind zum Verhindern eines Verklebens mit der Abrolleinrichtung.

10. Band nach einem der vorherigen Ansprüche, **dadurch gekennzeichnet, dass** es in nicht gefaltetem Zustand mindestens 3 bis 4 cm breit ist.

11. Band nach einem der vorherigen Ansprüche, **dadurch gekennzeichnet, dass** jeweils an Seitenbereichen zwei seitliche Längsabschnitte vorgesehen sind, welche perforiert sind.

12. Band nach einem der vorherigen Ansprüche, **dadurch gekennzeichnet, dass** ein nichtklebender Mittelstreifen vorgesehen ist und der perforierte Längsabschnitt von dem Mittelstreifen beabstandet ist.

13. Band nach einem der vorherigen Ansprüche, **dadurch gekennzeichnet, dass** die Trägerschicht, die Klebeschicht und die abziehbare Deckfolie perforiert sind.

14. Band nach einem der vorherigen Ansprüche, **dadurch gekennzeichnet, dass** die Trägerschicht aus einem solchen, insbesondere offenporigen, Material besteht, welches eine gute Hafteigenschaft für Mauerputz aufweist.

15. Band nach einem der vorherigen Ansprüche, **dadurch gekennzeichnet, dass** der perforierte Abschnitt Öffnungen mit einem durchschnittlichen Durchmesser von mindestens 3 Millimetern aufweist.

16. Band nach Anspruch 15, **dadurch gekennzeichnet, dass** die Öffnungen im wesentlichen rund, eckig oder oval sind.

17. Dispenser für ein zu einer Klebeband-Rolle aufgewickeltes, selbstklebendes Band nach einem der Ansprüche 1 bis 16, welcher die Klebeband-Rolle im wesentlichen umschließt und zumindest einen Auslaßschlitz für das Band aufweist.

18. Dispenser nach Anspruch 17, **dadurch gekennzeichnet, dass** als Material Karton eingesetzt ist.
